# FASCICULE DE BREVET EUROPEEN

(11) **EP 3 089 950 B1**
(45) Date de publication et mention de la délivrance du brevet: **14.11.2018**
(21) Numéro de dépôt: 14831010.5
(22) Date de dépôt: 23.12.2014
(51) Int. Cl.: C04B 24/38, C04B 28/14, C04B 111/00

(54) **MATERIAU A BASE DE PLATRE RENFERMANT DE LA CASEINE ET DU CHARBON ACTIF**
GIPSMATERIAL AUF MÖRTELBASIS MIT CASEIN UND AKTIVKOHLE
GYPSUM PLASTER-BASED MATERIAL CONTAINING CASEIN AND ACTIVATED CARBON

(30) Priorité: 03.01.2014 FR 1450028
(43) Date de publication de la demande: 09.11.2016
(73) Titulaire: Saint-Gobain Placo, 92150 Suresnes (FR)
(72) Inventeur: CHUDA, Katarzyna, F-92600 Asnieres sur Seine (FR); DEMATHIEU-ROELTGEN, Caroline, F-77100 Meaux (FR); DIDIER, Benoit, B-4000 Liege (BE)
(74) Mandataire: Saint-Gobain Recherche
(86) Numéro de dépôt international: PCT/FR2014/053526
(87) Numéro de publication internationale: WO 2015/101743

(56) Documents cités:
- WO-A1-2011/078708
- JP-A- H1 158 594
- JP-A- 2002 114 557
- US-A- 1 638 001
- US-A- 1 638 001
- US-A1- 2004 101 695

## Description

L'invention se rapporte à un matériau à base de plâtre apte à réduire la quantité de composés organiques volatils présents dans l'air ambiant, en particulier une plaque de plâtre destinée à l'aménagement intérieur de bâtiments d'habitation.

Des matériaux composites très divers sont utilisés dans le domaine de la construction et de l'agencement de bâtiments en général, notamment des immeubles d'habitation ou de bureaux et des bâtiments publics (musées, cinémas, salles de concert, ...). Certains de ces matériaux tels que les isolants acoustiques et/ou thermiques, les panneaux de bois, les éléments de mobilier et de décoration, utilisent des adhésifs, des peintures et des vernis à base de résines qui renferment ou libèrent dans le temps des composés organiques volatils. Ces composés se retrouvent dans l'air ambiant et, même si leur quantité paraît faible, ils peuvent à la longue incommoder voire affecter la santé des personnes qui y sont exposées.

US2004/0101695 décrit un matériau de construction, notamment à base de plâtre, permettant d'éliminer des odeurs à l'intérieur d'un bâtiment. Le matériau comprend un composé hydrazide afin d'adsrber les aldéhydes et un carbure inorganique afin d'absorber les autres COV. Le carbure organique peut être du charbon actif.

Ces dernières années, la proportion de composés organiques volatils dans les résines précitées a fortement diminué du fait d'une réglementation plus stricte. Pour autant, les tentatives pour remplacer ces résines par d'autres sans composés organiques volatils n'ont pas abouti car les résines de substitution proposées ont un coût plus élevé et les produits obtenus ont un niveau de performance plus faible.

La présente invention a pour but de réduire la teneur en composés organiques volatils à l'intérieur des bâtiments, en particulier à usage d'habitation ou de bureau, afin d'améliorer la qualité de l'air ambiant. Les composés organiques volatils visés sont plus particulièrement des aldéhydes, des cétones et des composés aromatiques.

Pour atteindre ce but, la présente invention propose un matériau à base plâtre, notamment une plaque de plâtre, qui renferme un mélange de caséine et de charbon actif.

Un autre objet de l'invention concerne l'utilisation dudit matériau à base de plâtre pour réduire la quantité de composés organiques volatils dans l'air intérieur de bâtiments, en particulier des aldéhydes, des cétones et des composés aromatiques.

Dans la présente demande, l'expression « composé organique volatil » désigne un composé contenant du carbone et au moins un des éléments suivants : hydrogène, halogène, oxygène, soufre, phosphore, silicium et azote, à l'exception des oxydes de carbone et des carbonates et bicarbonates inorganiques, qui possède une pression de vapeur au moins égale à 0,01 kPa à une température de 293,15°K. Les composés organiques volatils tout particulièrement visés par la présente invention sont des composés contenant du carbone, de l'hydrogène et de l'oxygène.

La caséine conforme à la présente invention peut provenir du lait de tout mammifère, de préférence du lait de vache. La caséine peut se présenter sous la forme native ou avoir subi un traitement d'hydrolyse ou enzymatique, notamment par les enzymes de la présure, un traitement faisant intervenir un acide ou une base (pour former dans ce dernier cas un caséinate). La caséine peut être un mélange de plusieurs caséines. De préférence, les caséines sont des caséines natives ou des caséinates, ces dernières présentant l'avantage d'être solubles dans l'eau.

Le charbon actif conforme à la présente invention présente une surface spécifique au moins égale à 100 m²/g, de préférence au moins égale à 200 m²/g et avantageusement qui varie de 400 à 2500 m²/g. Le charbon actif peut être un mélange de plusieurs charbons actifs.

La quantité totale de caséine et de charbon actif à utiliser varie généralement de 0,01 à 40 parts en poids pour 100 parts en poids de plâtre, de préférence de 0,1 à 20 parts et avantageusement de 0,5 à 10 parts.

Dans le matériau à base de plâtre, la caséine représente au moins 0,1 % en poids du mélange de caséine et de charbon actif et de préférence 1,0 à 60 %.

Les inventeurs ont mis en évidence un effet de synergie entre la caséine et le charbon actif. La réduction de la quantité de composés organiques volatils obtenue une quantité définie de caséine et de charbon actif est plus élevée que la réduction obtenue pour une même quantité de caséine ou de charbon actif. Les exemples de réalisation illustrent cet effet de synergie.

Le matériau à base de plâtre peut contenir en outre des additifs qui améliorent les propriétés physico-chimiques du produit final et permettent d'obtenir de bonnes conditions d'application. Ledit matériau peut ainsi comprendre les additifs suivants dans les proportions pondérales suivantes, exprimées pour 100 parts en poids de plâtre :
- 0,1 à 15 parts d'un agent d'adhésion dont la fonction est d'augmenter l'adhésion du revêtement en papier avec le plâtre, par exemple un amidon, notamment préalablement traité avec un acide, une dextrine ou une farine végétale, notamment de blé ou de maïs,
- 0,001 à 10 parts d'un accélérateur de prise, par exemple le sulfate de calcium hydraté ou le sulfate de potassium,
- 0,001 à 10 parts d'un biocide, par exemple le sodium omadine,
- 0,0001 à 1 part d'un agent moussant qui a pour rôle de créer des pores afin de diminuer la densité du produit final, en particulier de plaques de plâtre. A titre d'exemple, on peut citer le laurylsulfate de sodium,
- 0 à 10 parts d'au moins un agent hydrofugeant, par exemple un siloxane ou un polysiloxane,
- 0 à 20 parts d'au moins un agent anti-feu, par exemple la vermiculite, la silice, notamment de dimension micrométrique, une argile ou des fibres métalliques,
- 0 à 20 parts d'au moins un agent de renforcement, par exemple des fibres de polymère, des fibres minérales, notamment en verre, et des fibres animales ou végétales.

La fabrication de panneaux de plâtre, en particulier une plaque de plâtre est connue en soi.

Bien que l'invention soit plus particulièrement décrite au regard de panneaux de plâtre, elle n'est pas limitée à ce type de matériau et comprend les matériaux à base de plâtre sous quelque forme que ce soit (poudre, mortier, mastic).

La plaque de plâtre est formée selon un procédé en continu qui consiste à mélanger du gypse calciné en poudre (hémihydrate de sulfate de calcium) avec de l'eau pour former une pâte qui est déposée en continu entre deux feuilles de papier. Le produit formé est pressé pour obtenir l'épaisseur désirée, puis il est transporté en continu sur un convoyeur sur une distance permettant à la pâte de d'atteindre un niveau de durcissement suffisant pour pouvoir être découpée en plaques de longueur déterminée. Les plaques sont ensuite séchées dans un four afin d'éliminer l'excès d'eau.

Classiquement, les composants en poudre de la pâte comprennent l'hémihydrate de sulfate de calcium (CaSO₄.0,5 H₂O ; gypse calciné) et les éventuels additifs décrits plus haut. Le gypse calciné subit une réaction d'hydratation en présence d'eau et se transforme en dihydrate de sulfate de calcium (CaSO₄.2 H₂O : gypse).

La quantité de gypse calciné mis en oeuvre pour former la pâte varie selon la nature du panneau à fabriquer, généralement de 50 à 150 parts en poids pour 100 parts en poids d'eau, de préférence de 80 à 120 parts.

L'épaisseur du panneau peut varier dans une large mesure, par exemple de 6 à 25 millimètres.

Le mélange de caséine et de charbon actif peut être introduit dans la plaque de plâtre de différentes manières.

Selon un premier mode de réalisation, préféré, on ajoute ledit mélange dans la pâte de gypse calciné avant que celle-ci soit déposée entre les feuilles de papier.

L'ajout de la caséine et du charbon actif peut se faire pendant la fabrication de la pâte, par exemple en introduisant simultanément ou successivement le gypse calciné et les composés précités l'eau, ou après que la pâte a été obtenue. L'ajout simultané des constituants est avantageux car plus facile à mettre en oeuvre.

Ce mode de réalisation permet d'avoir une répartition homogène de la caséine et du charbon actif dans la masse de plâtre, et donc une teneur constante sur toute l'épaisseur de la plaque.

Selon un deuxième mode de réalisation, on dépose sur la première feuille de papier (inférieure) une couche de faible épaisseur, généralement inférieure à 2 mm, de préférence inférieure à 1 mm, d'une pâte de gypse calciné contenant le mélange de caséine et de charbon actif, puis la pâte de gypse calciné, et enfin la deuxième feuille de papier (supérieure). L'application de la pâte contenant la caséine et le charbon actif peut se faire par tout moyen connu de l'homme du métier, par exemple par la technique d'enduction au rouleau (roller coating). Cette manière de procéder permet l'application du mélange de caséine et de charbon actif sur une face de la plaque de plâtre et sur une partie seulement de l'épaisseur.

Selon un troisième mode de réalisation, on ajoute la caséine et le charbon actif dans ou sur la ou les feuilles de papier servant de revêtement. L'ajout peut se faire lors de la fabrication du papier, par exemple dans la suspension de fibres de cellulose, ou sur au moins une face de la feuille de papier, par exemple par pulvérisation.

Le matériau à base de plâtre conforme à la présente invention peut se présenter sous la forme d'une poudre (plâtre, mortier), d'une pâte (mastic, matériau de jointement) ou d'un panneau de plâtre. S'agissant plus particulièrement du panneau de plâtre, celui-ci peut être une plaque nue ou revêtue sur au moins une de ses faces d'une feuille de papier, un panneau acoustique comportant des perforations, un panneau de plâtre et de laine minérale ou de bois, une plaque renforcée par des fibres ou un tissu.

Le matériau à base de plâtre conforme à l'invention peut être utilisé sur les murs, les plafonds et les sols, notamment pour revêtir ou jointer des panneaux de plâtre ou de ciment ou, s'agissant de panneaux, pour former des parements, des cloisons et des faux-plafonds.

L'utilisation du matériau à base de plâtre à l'intérieur d'un bâtiment sur un lieu d'habitation, public ou de travail permet de réduire la quantité de composés organiques volatils présents dans l'atmosphère qui de ce fait se trouve ainsi assainie.

Les exemples qui suivent permettent d'illustrer l'invention sans toutefois la limiter.

### EXEMPLES 1 A 3

### a) fabrication du matériau à base de plâtre

Dans un mélangeur, on introduit 950 g d'hémihydrate de sulfate de calcium, 5,2 g d'amidon, 0,1 g de gypse broyé, le(s) composé(s) ci-après et 850 g d'eau.
Caséine (25 g) + charbon actif (25 g) : exemple 1
Caséine (50 g) : exemple 2 (comparatif)
Charbon actif (50 g) : exemple 3 (comparatif)

La caséine est commercialisée sous la référence C3400 par la société Sigma Aldrich.

Le charbon actif est commercialisé sous la référence Envirocarb® 207C 4x8 par la société Chemviron Carbon. Il présente une masse surfacique égale à 1100 m²/g et il est broyé avant son introduction dans le mélangeur.

Le mélange est agité pendant 60 secondes afin d'obtenir une pâte.

La pâte est versée dans un moule en laiton (250 mm x 200 mm) revêtu intérieurement sur sa face inférieure d'une feuille de papier, puis une deuxième feuille de papier découpée aux dimensions du moule est appliquée sur la pâte.

Après la prise en masse, la plaque de plâtre est sortie du moule. Elle est ensuite séchée dans une étuve dont l'atmosphère est saturée en eau dans les conditions suivantes : à 180°C jusqu'à ce que 80 % de l'eau soit éliminée, à 100°C jusqu'à ce que 95 % de l'eau soit éliminée et à 40°C pendant 24 heures.

La plaque est emballée dans un sac étanche à l'air et aux rayons ultraviolets.

### b) aptitude à piéger les composés organiques volatils

La mesure de l'aptitude à piéger les composés organiques volatils (acétaldéhyde, acétone et benzène) est effectuée dans une chambre de test étanche aux gaz.

La plaque de plâtre (100 mm x 20 mm ; 125 g) est placée dans la chambre de test, puis la chambre est fermée hermétiquement. On fait circuler dans la chambre un flux continu d'air (humidité relative : 50 %) contenant 20 ppb du composé organique volatil à tester à raison de 250 ml/min.

La mesure de la quantité de composé organique volatil est effectuée en temps réel au moyen d'un spectromètre de masse FTICR (Fourier Transform Ion Cyclotron Resonance) pourvu d'un aimant de 1 Tesla. Le principe de la mesure est le suivant : on utilise une membrane plate semi-poreuse en polydiméthylsiloxane (PDMS) faisant office de barrière entre la pression à la sortie de la chambre (pression atmosphérique) et le vide du spectromètre de masse. La différence de pression de part et d'autre de la membrane et le caractère semi-poreux de la membrane font que les composés organiques volatils migrent plus rapidement à travers la membrane que les autres molécules contenues dans l'air injecté (oxygène, azote, argon, gaz carbonique et eau). Il en résulte un enrichissement en composés organiques volatils d'où une plus grande sensibilité de la détection par le spectromètre de masse.

Les résultats donnés dans le tableau suivant correspondent à une valeur moyenne établie sur une série de trois échantillons d'une même plaque de plâtre. Le tableau indique le pourcentage de réduction de la teneur des composés organiques volatils ci-après :

| | Acetaldéhyde (%) | Acetone (%) | Benzène (%) |
|---|---|---|---|
| Ex. 1 | 95 | 92 | 75 |
| Ex. 2 (comp.) | 50 | 28 | 0 |
| Ex. 3 (comp.) | 3 | 40 | 69 |

On observe que le mélange de caséine et de charbon actif (exemple 1) permet de réduire la teneur en composés organiques volatils de manière plus importante que la caséine (exemple 2) ou le charbon actif (exemple 3), à quantité identique. L'effet de synergie entre la caséine et le charbon actif est ainsi démontré.

## Revendications

1. Matériau à base de plâtre, **caractérisé en ce qu'**il renferme un mélange de caséine et de charbon actif.

2. Matériau selon la revendication 1, **caractérisé en ce que** la quantité totale de caséine et de charbon actif varie de 0,01 à 40 parts en poids pour 100 parts en poids de plâtre, de préférence de 0,1 à 20 parts et avantageusement de 0,5 à 10 parts.

3. Matériau selon la revendication 1 ou 2, **caractérisé en ce que** la caséine représente au moins 0,1 % en poids du mélange de caséine et de charbon actif, de préférence 1,0 à 60%.

4. Matériau selon l'une des revendications 1 à 3, **caractérisé en ce qu'**il comprend en outre les additifs suivants dans les proportions pondérales suivantes, exprimées pour 100 parts en poids de plâtre :
- 0,1 à 15 parts d'un agent d'adhésion, par exemple un amidon, notamment préalablement traité avec un acide, une dextrine ou une farine végétale,
- 0,001 à 10 parts d'un accélérateur de prise, par exemple le sulfate de calcium hydraté ou le sulfate de potassium,
- 0,0001 à 1 part d'un agent moussant, par exemple le laurylsulfate de sodium,
- 0 à 10 parts d'au moins un agent hydrofugeant, par exemple un siloxane,
- 0 à 20 parts d'au moins un agent anti-feu, par exemple la vermiculite, la silice, une argile ou des fibres métalliques,
- 0 à 20 parts d'au moins un agent de renforcement, par exemple des fibres de polymère, des fibres minérales ou des fibres animales ou végétales.

5. Matériau selon l'une des revendications 1 à 4, **caractérisé en ce qu'**il se présente sous la forme d'une poudre, d'une pâte ou d'un panneau de plâtre.

6. Matériau selon l'une des revendications 1 à 4, **caractérisé en ce qu'**il s'agit d'une plaque de plâtre.

7. Utilisation d'un matériau selon l'une des revendications 1 à 6 pour réduire la quantité de composés organiques volatils dans l'air intérieur de bâtiments.

8. Utilisation selon la revendication 7, **caractérisée en ce que** les composés organiques volatils sont des aldéhydes, des cétones et des composés aromatiques.

## Patentansprüche

1. Material auf Basis von Gips, **dadurch gekennzeichnet, dass** es eine Mischung aus Casein und Aktivkohle enthält.

2. Material nach Anspruch 1, **dadurch gekennzeichnet, dass** die Gesamtmenge an Casein und Aktivkohle im Bereich von 0,01 bis 40 Gewichtsteilen pro 100 Gewichtsteile Gips, vorzugsweise von 0,1 bis 20 Gewichtsteilen und vorteilhafterweise von 0,5 bis 10 Gewichtsteilen liegt.

3. Material nach Anspruch 1 oder 2, **dadurch gekennzeichnet, dass** das Casein mindestens 0,1 Gew.-% der Casein-Aktivkohle-Mischung, vorzugsweise 1,0 bis 60%, darstellt.

4. Material nach einem der Ansprüche 1 bis 3, **dadurch gekennzeichnet, dass** es ferner die folgenden Zusatzstoffe in den folgenden Gewichtsanteilen, bezogen auf 100 Gewichtsteile Gips, umfasst:
- 0,1 bis 15 Teile eines Haftvermittlers, beispielsweise einer Stärke, insbesondere vorbehandelt mit einer Säure, einem Dextrin oder einem pflanzlichen Mehl,
- 0,001 bis 10 Teile eines Abbindebeschleunigers, beispielsweise Calciumsulfathydrat oder Kaliumsulfat,
- 0,0001 bis 1 Teil eines Schäumungsmittels, beispielsweise Natriumlaurylsulfat,
- 0 bis 10 Teile mindestens eines wasserabweisenden Mittels, beispielsweise eines Siloxans,
- 0 bis 20 Teile mindestens eines Brandbekämpfungsmittels, beispielsweise Vermiculit, Siliciumdioxid, ein Ton oder Metallfasern,
- 0 bis 20 Teile mindestens eines Verstärkungsmittels, beispielsweise Polymerfasern, Mineralfasern oder tierische oder pflanzliche Fasern.

5. Material nach einem der Ansprüche 1 bis 4, **dadurch gekennzeichnet, dass** es in Form eines Pulvers, einer Paste oder einer Gipskartonplatte vorliegt.

6. Material nach einem der Ansprüche 1 bis 4, **dadurch gekennzeichnet, dass** es sich um eine Gipskartonplatte handelt.

7. Verwendung eines Materials nach einem der Ansprüche 1 bis 6 zur Verringerung der Menge an flüchtigen organischen Verbindungen in der Innenluft von Gebäuden.

8. Verwendung nach Anspruch 7, **dadurch gekennzeichnet, dass** die flüchtigen organischen Verbindungen Aldehyde, Ketone und aromatische Verbindungen sind.

## Claims

1. Plaster-based material, **characterized in that** it contains a mixture of casein and active charcoal.

2. Material according to Claim 1, **characterized in that** the total amount of casein and active charcoal ranges from 0.01 to 40 parts by weight per 100 parts by weight of plaster, preferably from 0.1 to 20 parts and advantageously from 0.5 to 10 parts.

3. Material according to Claim 1 or 2, **characterized in that** the casein represents at least 0.1% by weight of the mixture of casein and active charcoal, preferably 1.0 percent to 60%.

4. Material according to one of Claims 1 to 3, **characterized in that** it also comprises the following additives in the following weight proportions, expressed per 100 parts by weight of plaster:
- 0.1 to 15 parts of an adhesion agent, for example a starch, especially pretreated with an acid, a dextrin or a vegetable flour,
- 0.001 to 10 parts of a setting accelerator, for example hydrated calcium sulfate or potassium sulfate,
- 0.0001 to 1 part of a foaming agent, for example sodium lauryl sulfate,
- 0 to 10 parts of at least one water repellent, for example a siloxane,
- 0 to 20 parts of at least one fire retardant, for example vermiculite, silica, a clay or metal fibres,
- 0 to 20 parts of at least one reinforcer, for example polymer fibres, mineral fibres, especially glass fibres, and animal or vegetable fibres.

5. Material according to one of Claims 1 to 4, **characterized in that** it is in the form of a powder, a paste or a plaster panel.

6. Material according to one of Claims 1 to 4, **characterized in that** it is a plasterboard.

7. Use of a material according to one of Claims 1 to 6, for reducing the amount of volatile organic compounds in the interior air of buildings.

8. Use according to Claim 7, **characterized in that** the volatile organic compounds are aldehydes, ketones and aromatic compounds.
